# EUROPÄISCHE PATENTANMELDUNG

(11) **EP 2 025 543 A1**
(43) Veröffentlichungstag der Anmeldung: **18.02.2009**
(21) Anmeldenummer: 07291021.9
(22) Anmeldetag: 17.08.2007
(51) Int. Cl.: B60H 3/00

(54) **Verfahren zur Wartung oder zum Austausch des Filters einer Belüftungs, Heizungs- und/oder Klimaanlage**

(71) Anmelder: Behr France Rouffach SAS, 68250 Rouffach (FR)
(72) Erfinder: Klein, Henri, 68000 Colmar (FR)
(74) Vertreter: Grauel, Andreas

(57) **Zusammenfassung**

Die Erfindung betrifft ein Verfahren zur Wartung oder zum Austausch des Filters einer Belüftungs-, Heizungs- und/oder Klimaanlage für ein Kraftfahrzeug, wonach ein als Erstausstattung vor dem vollständigen Zusammenbau oder dem Einbau der Belüftungs-, Heizungs- und/oder Klimaanlage in ein Kraftfahrzeug eingebauter erster Filter (2) unter zumindest teilweiser mechanischer Zerstörung ausgebaut wird und ein zweiter Filter (21), der zerstörungsfrei in die Belüftungs-, Heizungs- und/oder Klimaanlage ein- und ausbaubar ist, ersetzt wird.

## Beschreibung

Die Erfindung betrifft ein Verfahren zur Wartung oder zum Austausch des Filters einer Belüftungs-, Heizungs- und/oder Klimaanlage gemäß dem Oberbegriff des Anspruchs 1, sowie eine Belüftungs-, Heiz- oder Klimaanlage für ein Kraftfahrzeug gemäß dem Oberbegriff des Anspruchs 5.

Gehäuse von Belüftungs-, Heizungs- und/oder Klimaanlagen von Kraftfahrzeugen weisen einen oder mehrere Filter auf, die die Außenluft vor dem Einströmen in den Fahrgastraum von Verunreinigungen wie Pollen, Sporen oder Rußpartikeln befreien. Diese Filter können als Staubfilter, Kohleaktivfilter oder als Kombifilter konzipiert sein. Die vom Filter aufgenommenen Verunreinigungen lagern sich an der Oberfläche des Filters ab und behindern die Luft somit an der Durchströmung. Deswegen ist ein regelmäßiger Austausch des Filters notwendig, um den gewünschten Luftdurchsatz und eine gute Luftqualität zu gewährleisten. Bei modernen, bauraumoptimierten Fahrzeugen steht jedoch meist nicht genügend Platz zur Verfügung, den Filter vollständig aus dem Gehäuse heraus zu ziehen. Ein Ausbau des gesamten Gehäuses ist sehr zeit- und kostenintensiv.

In der Offenlegungsschrift DE 102 45 252 A1 wird deswegen ein Filter vorgeschlagen der aus zwei, über ein Filmscharnier beweglich miteinander verbundenen, Teilen besteht. Durch die Knickbarkeit des Filters ist ein einfacherer Ein- und Ausbau des Filters in das, bzw. aus dem Gehäuse möglich. Solch ein Spezialfilter ist jedoch schwieriger herzustellen und somit teurer als ein herkömmlicher Standardfilter ohne Knickvorrichtung.

Ausgehend von diesem Stand der Technik ist es die Aufgabe der Erfindung, ein einfaches und kostengünstiges Verfahren zur Wartung oder zum Austausch des Filters einer Belüftungs-, Heizungs- und/oder Klimaanlage für ein Kraftfahrzeug bereitzustellen.

Diese Aufgabe wird erfindungsgemäß durch ein Verfahren mit den Merkmalen des Anspruchs 1 gelöst. Vorteilhafte Ausgestaltungen sind Gegenstand der Unteransprüche.

Erfindungsgemäß ist ein Verfahren vorgesehen, wonach ein als Erstausstattung vor dem vollständigen Zusammenbau oder dem Einbau der Belüftungs-, Heizungs- und/oder Klimaanlage in ein Kraftfahrzeug eingebauter erster Filter unter zumindest teilweiser mechanischer Zerstörung ausgebaut wird und ein zweiter Filter, der zerstörungsfrei in die Belüftungs-, Heizungs- und/oder Klimaanlage ein- und ausbaubar ist, ersetzt wird. Als Erstausstattung beinhaltet die Belüftungs-, Heizungs- und/oder Klimaanlage einen nicht knick- oder biegbaren Standardfilter, der einfach herzustellen und somit kostengünstig ist. Beim Ausbau wird der Filter z.B. geknickt oder zerbrochen, wodurch er vollständig aus dem Gehäuse heraus zu bewegen ist. Der Austauschfilter ist ein bieg- oder knickbarer Filter z.B. nach Art des angegebenen Stands der Technik oder ein vergleichbarer Filter. Dadurch ist ein einfacher Ein- und Ausbau in das, bzw. aus dem Gehäuse möglich.

Vorzugsweise ist die zumindest teilweise mechanische Zerstörung irreversibel und erfolgt z.B. durch Knicken oder durch Bruch.

Bevorzugt wird der Filter zumindest ein Stück weit aus dem Gehäuse herausbewegt, zumindest teilweise mechanisch zerstört und anschließend vollständig aus dem Gehäuse herausbewegt und ein zweiter Filter zerstörungsfrei in das Gehäuse eingebaut. Der Filter wird teilweise, idealerweise bis zum Anschlag an einer anderen Fahrzeugkomponente oder bis kurz davor, aus dem Gehäuse herausgezogen. Anschließend wird er z.B. geknickt oder zerbrochen um seinen Platzbedarf in Vertikalrichtung zu verringern und so ein Herausbewegen des kompletten Filters aus dem Gehäuse zu ermöglichen. Als Ersatz wird z.B. ein bieg- oder schwenkbarer Filter verwendet, der zerstörungsfrei in das Gehäuse eingebaut werden kann und ohne Einschränkungen funktioniert.

Bei einer Belüftungs-, Heizungs- oder Klimaanlage für ein Kraftfahrzeug mit einem Gehäuse und einem Filter, ist der Filter im in das Fahrzeug eingebauten Zustand der Belüftungs-, Heizungs- und/oder Klimaanlage nur unter zumindest teilweiser Zerstörung ausbaubar. Da der Filter größer ist als der zum Herausziehen zur Verfügung stehende Raum, ist eine Änderung der Ausdehnungsrichtung des Filters notwendig. Diese Änderung kann nur unter zumindest teilweiser Zerstörung erfolgen.

Bevorzugt weist das Gehäuse der Belüftungs-, Heizungs- oder Klimaanlage Gehäuse eine Filterwartungsöffnung auf. Dadurch kann der Filter ohne Zerstörung des Gehäuses aus diesem ausgebaut werden.

In einem bevorzugten Ausführungsbeispiel ist die Filterwartungsöffnung an der Unterseite oder an der Oberseite des Gehäuses angeordnet. Nach oben oder unten steht der meiste Platz für den Ein- und Ausbau des Filters zur Verfügung, da das Gehäuse an den Seiten meist von anderen Fahrzeugkomponenten vollständig umschlossen ist. Bei ausreichend Bauraum ist jedoch auch eine seitliche Anordnung der Filterwartungsöffnung möglich.

Vorzugsweise ist die Filterwartungsöffnung durch zumindest einen Deckel verschließbar. Somit wird verhindert, dass der Filter ungewollt aus dem Gehäuse heraus fällt und/oder dass Schmutz in das Filtergehäuse gelangt und den Filter verunreinigt.

Der Deckel ist bevorzugt mittels Clips- oder Steckverbindung oder mittels Klammern am Gehäuse angeordnet. Diese Verbindungen erlauben ein mehrmaliges Anbringen und Entfernen des Deckels.

Alternativ kann in einem weiteren Ausführungsbeispiel der Deckel einstückig mit dem Gehäuse verbunden sein. Dies macht eine gesonderte Herstellung des Deckels unnötig.

Vorzugsweise weist der Verbindungsbereich zwischen Deckel und Gehäuse eine Sollbruchstelle auf. Dadurch ist ein einfacheres Trennen des Deckels vom Gehäuse möglich. Ein erneutes Anbringen des Deckels am Gehäuse ist z.B. durch Kleben denkbar.

Im Folgenden wird die Erfindung anhand eines Ausführungsbeispiels in Bezugnahme auf die anliegenden Zeichnungen näher erläutert.

Fig. 1 zeigt eine Belüftungs-, Heizungs- und/oder Klimaanlage für ein Kraftfahrzeug mit einem Gehäuse und einem Filter, wie sie zum Ausgangszeitpunkt des erfindungsgemäßen Verfahrens vorliegt.

Fig. 2 zeigt die Belüftungs-, Heizungs- und/oder Klimaanlage nach dem Bruch eines ersten Filters.

Fig. 3 zeigt die Belüftungs-, Heizungs- und/oder Klimaanlage beim Einsetzen eines zweiten Filters.

Fig. 4 zeigt die Belüftungs-, Heizungs- und/oder Klimaanlage am Ende des erfindungsgemäßen Verfahrens.

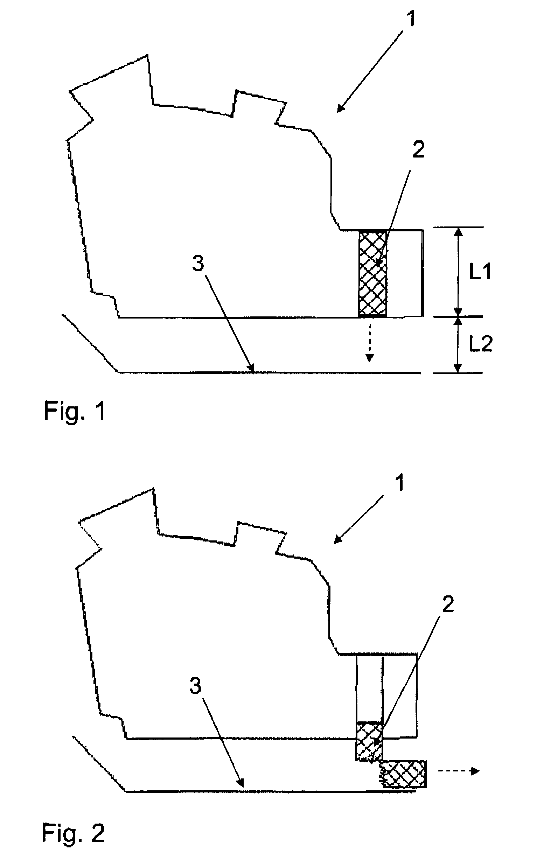

Das Ausführungsbeispiel in Fig. 1 zeigt das Gehäuse 1 einer Belüftungs-, Heizungs- und/oder Klimaanlage für ein Kraftfahrzeug mit einem Filter 2, der hier in einem Auslasskanal des Gehäuses 1 angeordnet ist. Die Position des Filters 2 kann jedoch variieren, sodass der Filter 2 auch weiter im Gehäuse 1, in einem Einlasskanal oder in einem anderen Auslasskanal untergebracht sein kann. Eine Fahrzeugkomponente 3, hier unterhalb des Gehäuses 1, behindert das Herausziehen des Filters 2 aus dem Gehäuse 1 in Richtung des gestrichelten Pfeils, da der Abstand L2 zwischen Gehäuseboden und Fahrzeugkomponente 3 deutlich kleiner ist als die Länge L1 des Filters 2. Die Fahrzeugkomponente 3 kann z.B. einen Teil der Innenverkleidung eines Fahrzeugs, den Fahrzeugboden oder ein Armaturenbrett darstellen.

In Fig. 2 ist der Filter 2 teilweise aus dem Gehäuse 1 herausgezogen und zerbrochen. Der Abstand zwischen Gehäuseunterseite und Fahrzeugkomponente 3 reicht nun aus, um den Filter 2 vollständig in Richtung des gestrichelten Pfeils aus dem Gehäuse 1 heraus zu ziehen.

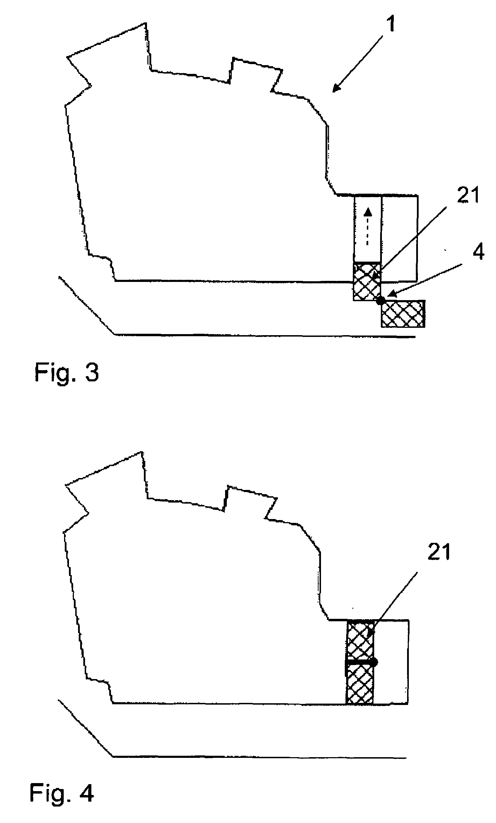

Fig. 3 zeigt einen schwenkbaren Filter 21, der in Pfeilrichtung in das Gehäuse 1 eingebracht wird. Durch das Schwenken, z.B. über ein Filmscharnier 4, benötigt der Filter 21 weniger Platz in vertikaler Richtung und lässt sich somit zerstörungsfrei in das Gehäuse 1 einführen. Ist der Filter 21 in etwa bis zum Filmscharnier 4 in das Gehäuse eingeschoben, kann er umgeklappt werden, so dass beide Teile des Filters 21 im Wesentlichen in einer Linie liegen. Anschließend kann der Filter 21 vollständig in das Gehäuse 1 geschoben werden.

Fig. 4 zeigt den Filter 21 vollständig im Gehäuse 1 untergebracht. Die Filterwartungsöffnung, durch die der Filter 21 in das Gehäuse 1 eingebracht wird, kann mittels Deckel verschlossen werden.

## Patentansprüche

1. Verfahren zur Wartung oder zum Austausch des Filters einer Belüftungs-, Heizungs- und/oder Klimaanlage für ein Kraftfahrzeug, wonach ein als Erstausstattung vor dem vollständigen Zusammenbau oder dem Einbau der Belüftungs-, Heizungs- und/oder Klimaanlage in ein Kraftfahrzeug eingebauter erster Filter (2) unter zumindest teilweiser mechanischer Zerstörung ausgebaut wird und ein zweiter Filter (21), der zerstörungsfrei in die Belüftungs-, Heizungs- und/oder Klimaanlage ein- und ausbaubar ist, ersetzt wird.

2. Verfahren nach Anspruch 1, **dadurch gekennzeichnet, dass** die zumindest teilweise mechanische Zerstörung irreversibel ist.

3. Verfahren nach Anspruch 1 oder 2, **dadurch gekennzeichnet, dass** die zumindest teilweise mechanische Zerstörung durch Bruch erfolgt.

4. Verfahren nach Anspruch 1 oder 2, **dadurch gekennzeichnet, dass** die zumindest teilweise mechanische Zerstörung durch Knicken erfolgt.

5. Verfahren nach einem der vorhergehenden Ansprüche, **dadurch gekennzeichnet, dass** der erste Filter (2) zumindest ein Stück weit aus dem Gehäuse (1) der Belüftungs-, Heizungs- und/oder Klimaanlage herausbewegt, zumindest teilweise mechanisch zerstört und anschließend vollständig aus dem Gehäuse (1) entnommen wird.

6. Belüftungs-, Heizungs- oder Klimaanlage für ein Kraftfahrzeug mit einem Gehäuse (1) und einem Filter (2), **dadurch gekennzeichnet, dass** der Filter (1) im in das Fahrzeug eingebauten Zustand der Belüftungs-, Heizungs- und/oder Klimaanlage nur unter zumindest teilweiser Zerstörung ausbaubar ist.

7. Belüftungs-, Heizungs- oder Klimaanlage nach Anspruch 5, **dadurch gekennzeichnet, dass** das Gehäuse (1) eine Filterwartungsöffnung aufweist.

8. Belüftungs-, Heizungs- oder Klimaanlage für ein Kraftfahrzeug nach Anspruch 7, **dadurch gekennzeichnet, dass** die Filterwartungsöffnung an der Unter- oder an der Oberseite des Gehäuses (1) angeordnet ist.

9. Belüftungs-, Heizungs- oder Klimaanlage für ein Kraftfahrzeug nach einem der Ansprüche 7 oder 8, **dadurch gekennzeichnet, dass** die Filterwartungsöffnung durch zumindest einen Deckel verschließbar ist.

10. Belüftungs-, Heizungs- oder Klimaanlage für ein Kraftfahrzeug nach Anspruch 9, **dadurch gekennzeichnet, dass** der Deckel am Gehäuse (1) mittels Clips- oder Steckverbindung oder mittels Klammern am Gehäuse (1) angeordnet ist.

11. Belüftungs-, Heizungs- oder Klimaanlage für ein Kraftfahrzeug nach Anspruch 9, **dadurch gekennzeichnet, dass** der Deckel einstückig mit dem Gehäuse (1) verbunden ist.

12. Belüftungs-, Heizungs- oder Klimaanlage für ein Kraftfahrzeug nach Anspruch 11, **dadurch gekennzeichnet, dass** der Verbindungsbereich zwischen Deckel und Gehäuse (1) eine Sollbruchstelle aufweist.
